# EUROPEAN PATENT SPECIFICATION

(11) **EP 1 675 272 B1**
(45) Date of publication and mention of the grant of the patent: **12.04.2017**
(21) Application number: 05112815.5
(22) Date of filing: 22.12.2005
(51) Int. Cl.: H04B 1/40, G08G 5/00

(54) **Radio system with redundancy**
Radiosystem mit Redundanz
Système radio avec redondance

(30) Priority: 24.12.2004 GB 0428258
(43) Date of publication of application: 28.06.2006
(60) Divisional application: 17157177.1
(73) Proprietor: LEONARDO S.P.A., 00195 Roma (IT)
(72) Inventor: Fantappiè, Pierluigi, 50013, Campi Bisenzio (FI) (IT)
(74) Representative: Deambrogi, Edgardo

(56) References cited:
- DE-A1- 19 814 096
- GB-A- 2 140 583
- US-A- 5 940 754

## Description

This invention relates to an electronic system having duplicate electronic units and a change-over mechanism which responds to a malfunction in a unit currently in use by switching into service a backup unit. The invention arose in connection with the design of an air traffic control radio systems where even a short break of communication between an aircraft and a ground station could present a serious safety hazard.

A conventional air traffic control radio system of this type has two separate radio units and a third unit, which forms the change-over mechanism. Each of these three units has its own chassis forming a shelf supported in a common cabinet. At any one time a selected radio unit is set up to be the primary unit whilst the other unit provides so-called "redundancy." The change-over mechanism monitors the performance of the primary unit and, when a fault is detected, disconnects the primary unit and replaces it by the secondary unit.

A problem associated with this known system is that no provision is included for a failure of the change-over mechanism itself. Because the change-over mechanism controls connections to the radio transceivers, there is a potential for a failure within it to cause a complete failure of the whole system. It is not possible to cure this problem by providing duplicate change-over mechanisms because a third mechanism would then be required to manage change-over between them thereby introducing yet another component whose failure could cause a catastrophic shut-down of the whole system.

DE 198 14 096 discloses a change-over mechanism in a hierarchical automation system, wherein data from higher-order devices in the system are received and processed in all redun-dantly connected subsystems. Each active subsystem fault is reported via the bus system to the higher-order devices. An alternative, standby subsystem is activated directly via a separate connection between the redundantly connected subassemblies, bypassing the higher-order devices temporarily. A fault report concerning the active subsystem is processed in the higher-order devices of the system and these eventually authenticate activation of the standby subsystem.

US 5 940 754 discloses a method for remotely detecting at a ground station failed multiplexors and radio transceivers in an airborne telephone system, wherein usage activity of the devices is predicted using a normalized gaussian distribution and a faulty device is identified when it differs in actual usage from that predicted by a specified margin.

US6687217 B1 discloses a receiver monitor thath provides an alert signal upon loss of reception of a received signal at a receiver. A controller controls a pair of transmitter modules to selectively operate in the active or standby modes of operation in response to a signal from the receiver monitor.

The invention is defined in the claims.

The invention is most applicable to so called "software" radios because it is possible to program the inbuilt processor and memory with software to perform the fault detection and change-over functions. Thus, the change-over mechanism can be implemented without the addition of any hardware and consequently without the inclusion of additional physical components which themselves might be subject to failure.

Where each unit includes a transmitter and a receiver, the change-over can be effected just for transmitters or just for receivers so that, after change-over, the transmitter of one unit and the receiver of the other unit are operational. This mechanism allows one to have a system resilient even when a double "crossed" failure arises. However the change-over decision is preferably made according to an algorithm, which gives preference to the use of a transmitter and receiver of the same unit at any one time.

In a preferred arrangement there is a data link between the radio units by which the processor of the radio unit currently in use is able to derive an indication of the relative operational effectiveness of both units; and to trigger a change-over operation when a reserve unit is indicated as being more effective than a unit currently in use. The data link can be a cable or an infra-red or short range radio link.

Normally there will be just a main radio unit and one reserve unit. However it is possible to include more than one reserve unit if extra redundancy is required.

One of the problems associated with known systems is that the reserve radio unit will, in the absence of a fault, remain unused for a long period of time. Radio units suffer from an ageing process which means that faults can develop with time, even when the unit is not in use; some failures could develop in the reserve unit and it will go unnoticed until the unit is required to be used. By employing the invention it is possible to overcome this problem by building into the process of deciding when to effect a change-over, a factor depending on time or amount of use so that a change-over occurs regularly, even when there is no fault.

The processor preferably makes a decision to trigger a change-over operation by measuring the operational effectiveness of each unit and comparing the measurements to determine which unit would best be used. These measurements or "scores" can be calculated from factors, which include fault conditions or possible fault conditions of various elements or processes within the radio units. This technique is considered to be highly beneficial because it ensures that, when conditions are not ideal for either radio unit, the best one is always selected for use. The principle could be applied to many different forms of electronic equipment and is considered to have independent inventive merit.

Thus, according to a second aspect of this invention there is provided an electronic system comprising a number of similar units and a change-over mechanism designed to detect a fault in a unit which is operating and, in response to such detection, to substitute it with another unit; characterised in that the change-over mechanism is designed to monitor different properties of the unit which is operating, to derive an overall performance measurement, to compare the performance measurements for the different units, and to select for use the unit with the best performance measurement.

One embodiment of the invention will now be described by way of example with reference to the accompanying drawings in which: -
Fig 1 illustrates a radio system constructed in accordance with the invention and incorporating duplicate radio transceivers;
Fig 2 illustrates a primary radio transceiver of the system shown in Fig 1 and includes a diagrammatic representation of a procedure whereby complete or partial change-over to a reserve unit is performed at appropriate times.

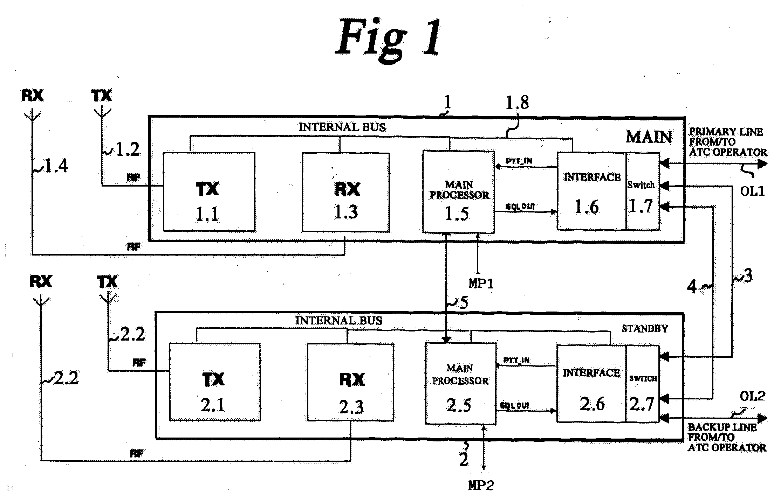

Referring firstly to Fig 1 there are shown two identical simplex radio transceivers 1 and 2, each of which has its own chassis and forms a shelf in a common cabinet, not shown. For the purposes of this description the transceiver 1 is assumed to be initially set up to be the primary unit whilst the transceiver 2 is initially a backup unit. Identical components associated with respective transceivers are denoted on the drawing with corresponding reference numerals.

The primary transceiver 1 comprises a transmitter 1.1 having an associated antenna 1.2; a receiver 1.3 having an associated antenna 1.4; a main processor 1.5; interface circuitry 1.6 which converts digital signals to analogue form (and vice versa); and a switching facility 1.7 included as part of the circuitry 1.6. The components 1.1, 1.3, 1.5 and 1.6 are all connected by a bus 1.8.

Under the control of the processor 1.5, the switch 1.7 switches signals from an operator on line OL1 either to transmitter 1.1 or to line 3. It also switches signals selectively from receiver 1.3 or line 4 onto the line OL1 and thence to the operator.

The secondary transceiver 2 is identical to transceiver 1, the only difference being that software loaded into the processor 1.5 during an initial setup procedure instructs the unit 1 to behave initially as the primary transceiver and the unit 2 as the backup or reserve transceiver.

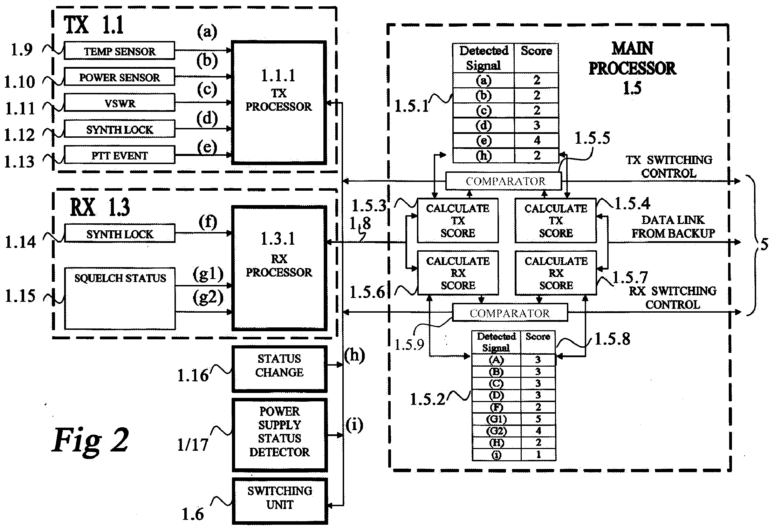

Referring now to Fig 2, the transmitter 1.1 contains a processor 1.1.1 which receives signals (a) to (e) as follows. The transceivers are connected by a data link 5.
Signal (a) is derived from a temperature sensor 1.9 and indicates that the temperature of the processor 1.1.1 is below a threshold level which might typically be about 90 degrees centigrade.
Signal (b) is derived from a power measurement device 1.10 and indicates that the output power to the antenna 1.2 is either above a lower threshold level when the transmitter is in use but without modulation, or above a higher threshold level when the transmitter is in use with modulation. A typical lower threshold level might be 5 watts and a typical upper threshold might be 50 watts.
Signal (c) is derived from a device 1.11 which calculates the voltage standing wave ratio on the output line to the antenna 1.2, and indicates that this is below a threshold value, signifying that power fed to the antenna is not being reflected back and that the antenna is therefore functioning correctly.
Signal (d) is derived from a frequency synthesiser 1.12 within the transmitter and indicates that this has locked onto a preset desired frequency.
Signal (e) is derived from a counter 1.13 which counts the number of PTT (press to talk) events since the last change-over operation. A signal (e) is produced so long as this count is below a preset maximum, eg four. After a changeover operation the counter is reset to zero.

The receiver contains a processor 1.3.1 which is arranged to receive signals (f), (g1) and (g2) as follows.
Signal (f) is obtained from a frequency synthesiser 1.14 and is equivalent to signal (d) of the transmitter.
Signal (g1) is derived from a squelch status detector 1.15 indicating that the receiver is working and detecting a good signal.
Signal (g2) is a squelch status signal indicating that the receiver is working but not detecting a good signal.
Signal (h) is derived from a facility, indicated schematically at 1.16, within the main processor 1.5. It indicates that the transceiver is not currently in maintenance mode: i.e. maintenance equipment has not been connected to the port MP1 (Fig 1) and registered by the main processor 1.5 as being in a status ready for downloading software.
Signal (i) is derived from a power supply status detector 1.17. It indicates that a power supply (not shown) is working and that the radio is switched on.

All of the signals (a) to (i) are multiplexed onto the data bus 1.8 so that they can be utilised by the main processor 1.5. In addition to receiving the signals (a) to (i) from within the unit 1, the main processor of unit 1 also receives corresponding signals from the reserve unit 2 via a data link 5 which, in this particular embodiment is a cable.

The main processor 1.5 is programmed to perform the processes illustrated in Fig 2 and which will now be described. It also has an associated memory in which look-up tables 1.5.1 and 1.5.2 are stored. These tables contain a score associated with each of the signals (a) to (i) as shown on the drawing.

At 1.5.3 the processor calculates the appropriate total score for the signals (a), (b), (c), (d), (e) and (h) from the main transceiver. A similar total is calculated at 1.5.4 using information from the backup transceiver accessed via cable 5. The totals are compared at 1.5.5.

If the score for the backup unit is greater than for the main unit, a signal is applied to the data bus 1.8 instructing the processor 1.1.1 to shut down the
transmitter of the main unit. This signal also instructs the switching unit 1.6 to divert signals received from an operator on line OL1 (Fig 1) onto line 3 from whence these signals for transmission are fed to the transmitter of the reserve unit. At the same time a signal is applied on the link 5 instructing the transmitter of the reserve unit to switch on.

At 1.5.6 the processor calculates the total score for the signals (a), (b), (c), (d), (f), (g1) (g2), (h), and (i) from the main transceiver; and a similar total is calculated at 1.5.7 using information from the backup transceiver accessed via cable 5. The totals are compared at 1.5.9.

If the score for the backup unit is greater than for the main unit, a signal is applied to the data bus 1.8 instructing the processor 1.3.1 to shut down the receiver of the main unit. This signal also instructs the switching unit 1.6 to cause signals received by the receiver 2.3 of the reserve unit and available on line 4, to be switched onto the line OL1 in place of the signals received at 1.3. At the same time a signal is applied on the link 5 instructing the receiver of the reserve unit to be switched on.

The scoring system as set out on Fig 2 has the following desirable effects.

Firstly, each time that the operator presses his PTT (press to talk) button, the count at 1.1.3 is advanced. After four operations (this is just an example, any number could be chosen) the score calculated at 1.5.3 loses a value of 4 making it almost inevitable that a changeover will take place. This ensures that both transmitters are regularly used so that a malfunction of either of them will become apparent soon after it has arisen.

Because the system selects the transmitter or receiver with the highest vote, one will be selected (the best one) even if there is a fault in both of them. Thus the system will try to operate even in the worst conditions.

It is possible to perform maintenance operations on any one unit eg to update software or firmware, to add or change a physical module or to change settings without disconnecting the unit from the system or removal of it from its cabinet. This is achieved because commencement of the maintenance operation causes removal the signal (h) and therefore of its associated score of 2.

It will be appreciated that the illustrated embodiment of the invention has been described only by way of example and that many variations are possible within the scope of the accompanying Claims. However it is believed that a radio system constructed on principles similar to those illustrated will be of considerable benefit to the safety of air traffic control radio systems because of the elimination of a separate change-over unit and of the risk that any such unit might itself be subject to failure.

## Claims

1. An electronic system comprising two or more units (1, 2), **characterised in that** each unit includes at least a first transmitter component (1.1; 2.1) and a second receiver component (1.3; 2.3), which are adapted to exchange signals with an operator line (OL1), wherein each unit (1, 2) has at least one fault sensor (1.9, 1.10, 1.11, 1.12, 1.14, 1.15) effective to detect a fault in a component (1.1, 1.3; 2.1, 2.3) of that unit and an associated processor (1.5; 2.5) which is programmed and arranged to detect the fault condition and to trigger a substitution in response to such detection, wherein a first unit is arranged to behave as a primary unit (1) and a second unit is arranged to behave as a backup unit (2), and the processor (1.5) of the primary unit (1) is arranged to control a switching facility (1.7) included in the primary unit (1) so as to only switch signals from the operator line (OL1) to a transmitter (2.1) of the backup unit (2) if a fault is detected in a transmitter (1.1) of the primary unit (1), or only selectively switch to the operator line (OL1) signals from a receiver (2.3) of the backup unit (2) if a fault is detected in a receiver (1.3) of the primary unit (1), so that after switch the transmitter (1.1; 2.1) of one unit and the receiver (2.3; 1.3) of the other unit are operational.

2. A system according to Claim 1 **characterised in that** the units (1, 2) are radio units for Air Traffic Control communications.

3. A system according to Claim 2 further **characterised in that** the processor (1.5, 2.5) also serves to process signals being received or transmitted.

## Patentansprüche

1. Ein elektronisches System, das zwei oder mehr Einheiten (1, 2) aufweist, das **dadurch gekennzeichnet ist, dass** jede Einheit zumindest eine erste Senderkomponente (1.1; 2.1) und eine zweite Empfängerkomponente (1.3; 2.3) umfasst, die dazu angepasst sind, Signale mit einer Bedienerleitung (OL1) auszutauschen, wobei jede Einheit (1, 2) zumindest einen Fehlersensor (1.9, 1.10, 1.11, 1.12, 1.14, 1.15), der dahin gehend wirksam ist, einen Fehler in einer Komponente (1.1, 1.3; 2.1, 2.3) dieser Einheit zu erfassen, und eine zugeordnete Verarbeitungseinrichtung (1.5; 2.5) aufweist, die programmiert und angeordnet ist, um den Fehlerzustand zu erfassen und ansprechend auf eine solche Erfassung ein Ersetzen auszulösen, wobei eine erste Einheit angeordnet ist, um sich als eine Primäreinheit (1) zu verhalten, und eine zweite Einheit angeordnet ist, um sich als eine Sicherungseinheit (2) zu verhalten, und die Verarbeitungseinrichtung (1.5) der Primäreinheit (1) angeordnet ist, um eine Umschalteinrichtung (1.7), die in der Primäreinheit (1) enthalten ist, dahin gehend zu steuern, ausschließlich Signale von der Bedienerleitung (OL1) zu einem Sender (2.1) der Sicherungseinheit (2) umzuschalten, falls in einem Sender (1.1) der Primäreinheit (1) ein Fehler erfasst wird, oder Signale von einem Empfänger (2.3) der Sicherungseinheit (2) ausschließlich selektiv zu der Bedienerleitung (OL1) umzuschalten, falls ein Fehler in einem Empfänger (1.3) der Primäreinheit (1) erfasst wird, so dass der Sender (1.1; 2.1) einer Einheit und der Empfänger (2.3; 1.3) der anderen Einheit nach dem Umschalten betriebsfähig sind.

2. Ein System gemäß Anspruch 1, das **dadurch gekennzeichnet ist, dass** die Einheiten (1, 2) Funkeinheiten für Flugverkehrskontrollkommunikationen sind.

3. Ein System gemäß Anspruch 2, das ferner **dadurch gekennzeichnet ist, dass** die Verarbeitungseinrichtung (1.5, 2.5) außerdem dazu dient, Signale zu verarbeiten, die empfangen oder gesendet werden.

## Revendications

1. Système électronique comprenant deux ou plus de deux unités (1, 2), **caractérisé en ce que** chaque unité comprend au moins un premier composant du type émetteur (1.1 ; 2.1) et un second composant du type récepteur (1.3 ; 2.3), qui sont adaptés à échanger des signaux avec une ligne d'opérateur (OL1), dans lequel chaque unité (1, 2) comprend au moins un détecteur de défaillance (1.9, 1.10, 1.11, 1.12, 1.14, 1.15) adapté à détecter une défaillance dans un composant (1.1, 1.3 ; 2.1, 2.3) de cette unité et un processeur associé (1.5 ; 2.5) qui est programmé et agencé pour détecter l'état de défaillance et pour déclencher une substitution en réponse à ladite détection, dans lequel une première unité est agencée pour se comporter comme une unité primaire (1) et une seconde unité est agencée pour se comporter comme une unité de secours (2), et le processeur (1.5) de l'unité primaire (1) est agencé pour commander un dispositif de commutation (1.7) inclus dans l'unité primaire (1) de manière à uniquement commuter des signaux de la ligne d'opérateur (OL1) vers un émetteur (2.1) de l'unité de secours (2) si une défaillance est détectée dans un émetteur (1.1) de l'unité primaire (1), ou à uniquement commuter sélectivement vers la ligne d'opérateur (OL1) des signaux provenant d'un récepteur (2.3) de l'unité de secours (2) si une défaillance est détectée dans un récepteur (1.3) de l'unité primaire (1), de sorte qu'après la commutation l'émetteur (1.1 ; 2.1) d'une unité et le récepteur (2.3 ; 1.3) de l'autre unité soient opérationnels.

2. Système selon la revendication 1 **caractérisé en ce que** les unités (1, 2) sont des unités radio pour des communications de contrôle du trafic aérien.

3. Système selon la revendication 2 **caractérisé en outre en ce que** le processeur (1.5, 2.5) sert également à traiter des signaux reçus ou émis.
